# FASCICULE DE BREVET EUROPEEN

(11) **EP 0 732 639 B1**
(45) Date de publication et mention de la délivrance du brevet: **25.04.2001**
(21) Numéro de dépôt: 95810181.8
(22) Date de dépôt: 17.03.1995
(51) Int. Cl.: G05B 19/42

(54) **Procédé d'élaboration et de fabrication de lentilles de contact**
Verfahren zur Herstellung von Kontaktlinsen
Method for manufacturing contact lenses

(43) Date de publication de la demande: 18.09.1996
(73) Titulaire: Muller, Gérard, 1814 La Tour de Peilz (CH)
(72) Inventeur: Muller, Gérard, 1814 La Tour de Peilz (CH)
(74) Mandataire: AMMANN PATENTANWAELTE AG BERN

(56) Documents cités:
- EP-A- 0 299 690
- EP-A- 0 359 084
- EP-A- 0 479 683
- WO-A-94/25887
- US-A- 5 114 628

## Description

La présente invention porte sur un procédé de réalisation de lentilles de contact sur mesure et individualisées, à partir de lentilles génériques, aux fins de rationalisation notamment de la commande établie par un spécialiste (c'est-à-dire un ophtalmologue, un contactologue ou un opticien).

Cette invention concerne toutes les catégories de lentilles de contact: rigides, flexibles (rigides minces) et souples (Hydrogel).

Au procédé selon l'invention participent deux partenaires, à savoir, d'une part, le fabricant de lentilles de contact et, d'autre part, ledit spécialiste. Ce dernier est en relation avec un utilisateur, porteur ou patient qui veut obtenir des lentilles de contact sur mesure.

A l'heure actuelle, selon l'état de la technique, chaque fabricant a dans sa gamme de production, au sein de chaque catégorie, des types de lentilles qu'il élabore lui-même. Pour fabriquer en grande série les lentilles de contact, les fabricants se limitent à un nombre réduit de types de lentilles présentant une géométrie bien définie et invariable. Il existe donc sur le marché une certaine quantité de types de lentilles, qui ont certains avantages et certains défauts. Mais pour le moment, il est impossible au spécialiste d'obtenir une lentille optimisée réunissant des géométries qu'il estime intéressantes et provenant de plusieurs types, voire de catégories de lentilles différentes. Il est également impossible au spécialiste de modifier à sa guise des géométries de lentilles existantes, ou de créer de nouvelles géométries. Malgré la complexité de la géométrie d'une lentille de contact, les fabricants limitent le nombre de paramètres sur lesquels le spécialiste peut intervenir lors de la commande de la lentille de contact. Mais même parmi ces paramètres, la gamme des valeurs disponibles n'est souvent pas continue, quand elle n'est pas, dans certains cas, limitative. Sauf spécification particulière, on entendra par la suite, par paramètre(s) ou valeur(s) d'une lentille, une donnée ou un ensemble de données caractérisant celle-ci (géométrie de la surface interne, en contact avec l'oeil du porteur, géométrie de la face externe, y compris d'éventuels moyens de stabilisation, paramètres des zones optique et périphérique). Enfin, si un spécialiste trouve une certaine géométrie de lentille satisfaisante, mais que la matière proposée par le fabricant n'est pas idéale (par exemple mauvaise tolérance de l'oeil du patient, existence d'autres matières avec des indices de réfraction plus intéressants, etc.), il ne lui sera pas possible, en règle générale, de changer de matière, ou alors, lorsque cette possibilité lui est donnée, le nombre de matières proposées est extrêmement limité. Par conséquent, le spécialiste ne pourra pratiquement jamais proposer à son patient une lentille optimisée selon ses idées et sa philosophie de l'adaptation des lentilles, et lui livrer une lentille qu'il estime parfaitement adaptée à la géométrie de son oeil.

Pour parfaire l'adaptation d'une lentille rigide, il peut arriver que le spécialiste veuille retoucher lui-même, par une méthode manuelle, la zone périphérique de la lentille. Cela va sans dire que cette opération est délicate et, à supposer qu'elle doive être répétée (par exemple en cas de renouvellement d'une lentille), elle ne pourra jamais l'être de manière identique.

EP-A-0 359 084 et US-A-5,114,628 proposent des procédés de fabrication de lentilles sur mesure en deux phases, dont la première consiste à rassembler les paramètres à respecter en fonction des données d'un oeil, en particulier de sa topographie, et à les mémoriser au moyen d'un support informatique. La deuxième phase, qui constitue la pierre angulaire de ces antériorités et à laquelle est donc consacrée la grande partie des développements, consiste en la fabrication d'une lentille de contact selon certains processus, sur la base des paramètres précités. Cette manière en procéder, parce qu'elle fait abstraction des problèmes et contraintes se posant lors de la première phase, est économiquement lourde à tel point qu'elle apparaît irréalisable. En effet, le spécialiste devra chaque fois définir chaque partie de la lentille de contact pour aboutir à une lentille "sur mesure", donc fournir un nombre considérable de données au fabricant. Le fabricant aura alors à tenir compte de toutes ces données pour usiner la lentille de contact. En considérant le temps nécessaire aux opérations traitement de l'ordre de fabrication et de transmission, d'introduction et de calculation des données, on se rend vite compte que c'est chose irréalisable et non rentable, si bien que le problème demeure entier.

Partant de cet état de la technique, l'objet de la présente invention est de proposer un procédé de réalisation de lentilles de contact sur mesure à partir de lentilles génériques permettant ainsi au spécialiste d'offrir à son patient des lentilles de contact personnalisées parfaitement adaptées à son oeil, cela à un prix compétitif et avec un indice qualité/prix optimum.

La présente invention a pour but de pallier les inconvénients exposés plus haut.

Cet objectif est atteint grâce au procédé décrit dans la revendication indépendante.

On va décrire ci-après en détail ce procédé, lequel comprend essentiellement deux stades: le premier consistant à créer une lentille générique, le second à fabriquer une ou plusieurs lentilles de contact déterminée(s), sur la base de la lentille générique, appelée(s) à être portée(s) par l'utilisateur final. Une telle lentille de contact finale, fabriquée, sera appelée ci-après "LCF".

Il convient donc d'expliquer en premier lieu la nouvelle notion de lentille générique et l'utilité de celle-ci.

On entend par lentille générique une lentille (ou portion de lentille) fictive (mais pouvant être également concrète, par exemple à des fins d'essai (cf. infra)) définie par sa géométrie et mémorisée sur un support informatique, afin d'avoir accès à ces données en tout temps et sans avoir à les saisir manuellement. La lentille générique sert de base à la fabrication d'une LCF ou d'une famille de LCF. Chacune de ces LCF est définie par la lentille générique, associée, le cas échéant, à quelques modifications de données de cette dernière. Pour aboutir à une LCF particulière, les données de la lentille générique sont recalculées automatiquement en tenant compte des modifications spécifiées par le spécialiste, afin d'aboutir aux données utiles à l'usinage de la lentille LCF. Si des modifications importantes, ou destinées à être utilisées ultérieurement pour d'autres LCF, sont associées à une lentille générique, il est toujours possible de les mémoriser, après calcul de la nouvelle géométrie, sous forme d'une nouvelle lentille générique. Ainsi, de lentille générique en lentille générique, il est possible de progresser vers n'importe quelle forme de lentille désirée.

Le spécialiste peut donc commander des lentilles personnalisées, encore jamais fabriquées, et cela selon les besoins de la clientèle, sans avoir à redéfinir tous les paramètres nécessaires à sa nouvelle lentille. Pour cela, il lui suffit de partir d'une lentille générique, de la modifier à sa guise afin d'obtenir une nouvelle lentille générique mieux adaptée, pour aboutir ainsi à la lentille ou famille de LCF désirée.

La lentille générique sert de support ou d'ensemble de données pour la conception, c'est-à-dire la définition de la LCF par le spécialiste et/ou le fabricant, pour la passation d'une (ou de) commande(s) de LCF par le spécialiste au fabricant et, enfin, pour les calculs des données nécessaires à la fabrication proprement dite de la ou des LCF par le fabricant. Ces données, sous forme de lentille générique, peuvent être mémorisées, reprises entièrement ou partiellement, modifiées ou même combinées avec les données d'au moins une autre lentille générique et/ou d'au moins une autre LCF, afin d'obtenir l'intercompatibilité des avantages de plusieurs lentilles génériques.

Le premier pas du procédé l'invention consiste à créer une lentille générique sur la base d'une LCF ou une lentille générique déjà existante, d'un dessin de lentille de contact, de valeurs théoriques, de portions de courbes, etc., ou de toutes combinaisons de modes possibles de représentation. La lentille générique est élaborée soit par le fabricant, soit par le spécialiste, soit en collaboration par ces deux personnes. Les lentilles génériques sont conservées chez le fabricant et/ou chez le spécialiste, sur papier, sur un support informatique ou même sous forme de lentilles d'essai, permettant de les reprendre en tout temps. Pour définir, parmi les valeurs de la lentille générique, la forme de celle-ci, toutes les définitions de forme de lentille sont utilisables, par exemple une coupe de la lentille si elle a une forme de révolution, ou une indication particulière ajoutée à une coupe si une toricité (forme torique qui n'est pas de révolution) ou un prisme doivent être définis. Ainsi, il est possible de définir une coupe de lentille à partir de morceaux de courbes planes tels que des droites, arcs de cercle, arcs de coniques, arcs de polynômes, courbes digitalisées ou toute courbe calculée. Mais il est aussi possible de définir la lentille à partir de surfaces en 3 dimensions (par exemple selon un plan topographique de la cornée), ou toute autre méthode de modélisation (numérique, texte écrit, photo, lentille réelle ...).

Indépendamment de la forme sous laquelle la lentille générique est définie, la lentille générique correspond toujours à un ensemble de données aptes à être traitées par un calculateur et une commande automatique de machine-outil qui seront mis en oeuvre pour produire la LCF.

La passation de commande d'une LCF par le spécialiste peut aussi être accompagnée d'un dessin de la lentille générique, modifiable à tout moment par le spécialiste afin de parfaire une courbe. Il sera tenu compte de ces modifications écrites dans la création d une nouvelle lentille générique et/ou de l'usinage de la LCF.

Voici un exemple de création d'une lentille générique (on suppose une LCF en annexe, appelée lentille 3239, et une courbe digitalisée "Alpha" dans la base de données du fabricant):

Création de la lentille générique 125:
- diamètre optique interne: 6.0 mm,
- rayon de courbure 8.0 mm
- puissance 0.0
- dégagement identique à la lentille 3239
- second dégagement extrême selon la courbe: "Alpha"
- rayon de courbure du bord de la lentille: 0.03 mm
- diamètre optique externe calculé selon le diamètre optique interne (trajet optique)
- les parties non définies ici doivent être reprises de la lentille 3239 annexée
- matière: PMMA

La fabrication, ou la production des LCF appartenant à une famille de LCF basée sur une lentille générique, constitue le second stade du procédé selon l'invention.

La production de chaque LCF se fait sur la base d'une lentille générique adéquate choisie par le spécialiste. C'est-à-dire que le spécialiste va choisir une lentille générique, puis faire la liste des modifications éventuelles à associer à cette lentille générique pour obtenir la LCF désirée. Si la LCF à créer correspond déjà exactement à la lentille générique (renouvellement d'une lentille de contact par exemple), alors le spécialiste peut simplement commander une LCF selon la lentille générique voulue. Si la LCF correspond, à quelques paramètres près, à la lentille générique choisie (elle fait partie de la famille de LCF basée sur la lentille générique), le spécialiste ajoute à la lentille générique, lors de la commande, les modifications nécessaires. Si la LCF est très différente de la lentille générique, ou que les modifications à apporter sont destinées à être reprises pour d'autres LCF, on peut définir une nouvelle lentille générique, et commander la LCF sur cette nouvelle base. Toutefois, si une nouvelle lentille générique n'est pas définie ici, le spécialiste pourra toujours la définir ultérieurement en prenant comme source la LCF ainsi créée.

A titre d'illustration, la commande par un spécialiste d'une LCF pourrait présenter les indications suivantes, en se référant à la lentille générique numéro 125 (créée dans l'exemple ci-dessus) et en assortissant cette dernière de certaines modifications faisant appel, par exemple, à une lentille générique 117 supposée avoir déjà été définie antérieurement et relative à une lentille torique stabilisée selon brevet européen No. 0 042 023:

Commande selon lentille générique no. 125
Modifications:
- Rayon interne 7.62, excentricité 0.4
- Puissance - 4.83
- Torique, de cylindre: -2.2 et d'axe 47 degrés
- Stabilisation de la lentille par bossages, identiques aux bosses de la lentille générique 117, mais décalées vers le bas de 0.4 mm

Une fois la commande effectuée, la LCF doit être créée sur la base des paramètres de la lentille générique et des modifications apportées. Pour supporter ou permettre ces modifications, certains paramètres de la lentille générique, non spécifiés par le spécialiste, doivent néanmoins subir des transformations. Celles-ci sont choisies parmi différentes relations: d'identité, de proportionnalité ou autres plus complexes par rapport aux paramètres correspondants de la lentille générique.

Les données nécessaires à la réalisation de la LCF sur la base d'une lentille générique, avec d'éventuelles modifications, sont obtenues automatiquement à l'aide d'un support informatique ou calculateur. Ces données sont ensuite transférées à la commande de la machine-outil également automatiquement. Un des buts de l'invention étant de diminuer le plus possible les saisies de paramètres de la lentille à usiner, il est avantageux de lier directement la sortie du calculateur à la commande d'usinage. Ce lien peut être établi par tous moyens connus, par exemple via un réseau informatique, un interface, des supports informatiques tels que disquettes, disques durs, optiques, magnéto-optiques, bandes magnétiques, ou tout autre support. Ces organes de traitement peuvent être intégrés dans une même unité.

Ce système est adaptable à n'importe quel type de machine-outil, pour autant qu'elle soit pilotable automatiquement (par exemple avec une commande numérique ou un ordinateur). Par contre, il est indépendant de la technique d'usinage. La machine-outil peut être un tour XY, polaire, avec burin ou fraise, comportant des actionneurs de tout type (moteurs électriques, vérins pneumatiques ou hydrauliques, actionneurs piézo-électroniques, ou autre). Il est même possible d'adapter ce système à d'autres méthodes d'usinage telles que l'usinage par laser, moulage, etc.

Mais dans tous les cas, pour que le but de l'adaptation individuelle et sur mesure de la LCF à l'oeil du patient soit atteint de manière suffisamment satisfaisante, il est indiqué que la précision du dispositif de mise en oeuvre du procédé de fabrication/d'usinage permette une précision de l'ordre de 1 micron, étant entendu que la qualité des résultats, c'est-à-dire du "sur mesure" de la LCF, va de pair avec la précision, si bien que l'on choisira avantageusement un dispositif dont la précision sera inférieure même au micron.

Il ressort de la description que le procédé selon l'invention prend son départ avec la création d'une lentille générique, laquelle peut être définie selon de multiples manières et possibilités, à savoir, notamment, à partir de dessins, lentilles se trouvant dans le commerce, schémas avec des valeurs usuelles, paramètres concernant par exemple la zone périphérique ou, plus particulièrement, à partir de lentilles génériques proposées par le fabricant ou de lentilles déjà adaptées par le spécialiste, pour permettre à ce dernier de proposer des lentilles individualisées, sans engager un supplément de travail et une perte de temps considérables. Grâce à ce procédé, le spécialiste a la possibilité de créer ses propres types de lentilles (confidentialité possible). Il est évident que ce procédé de fabrication s'applique à toutes les catégories de lentilles et tous les genres de corrections optiques et types de géométries.

## Revendications

1. Procédé de réalisation de lentilles de contact sur mesure, comprenant les phases suivantes:
- Création d'un jeu de lentilles génériques, chacune de celles-ci étant définie par un ensemble de paramètres, ces paramètres pouvant provenir notamment d'un tableau de valeurs, d'un dessin digitalisé, d'une photographie, de paramètres d'une lentille existante, de toute autre forme de modélisation analogique ou numérique, ou de toute combinaison de modes possibles de représentation;
- Sélection de la lentille de contact générique la mieux adaptée à l'oeil d'un patient, complétée, le cas échéant, par l'indication d'un ou plusieurs paramètres rectificatifs en fonction des données dudit oeil et/ou relative à au moins une autre lentille générique du jeu, pour aboutir ainsi à un ordre de fabrication d'une lentille de contact sur mesure (LCF), cette lentille ainsi définie pouvant enrichir ledit jeu de lentilles génériques;
- Fabrication de la lentille de contact sur mesure (LCF) sur la base de l'ordre tel que défini à la phase précédente en utilisant un dispositif de fabrication commandé par un ordinateur.

2. Procédé selon la revendication 1, caractérisé en ce que l'ordinateur de traitement et de mémorisation des données de la nouvelle lentille générique et la commande du dispositif de production de la LCF sont reliés entre eux ou intégrés dans une même unité.

3. Procédé selon la revendication 1 ou 2, caractérisé en ce que la précision du dispositif de fabrication mis en oeuvre pour la production de la LCF est de préférence de l'ordre de 1 micron.

4. Lentille de contact LCF produite par application du procédé selon l'une des revendications 1 à 3.

5. Lentille de contact LCF selon la revendication 4, caractérisée en ce qu'elle comporte des moyens de stabilisation, avantageusement des bossages.

## Patentansprüche

1. Verfahren zur Herstellung von Kontaktlinsen nach Mass, mit folgenden Schritten:
- Schaffung eines Satzes generischer Linsen, welche jeweils durch eine Anzahl Parameter bestimmt sind, die namentlich von einer Wertetabelle, einer digitalisierten Abbildung, einer Photographie, von Parametern einer existierenden Linse, von einer beliebigen anderen analogen oder digitalen Art des Modellierens oder einer beliebigen Kombination möglicher Darstellungsformen stammen können;
- Auswahl der dem Auge eines Patienten am besten angepassten generischen Kontaktlinse, gegebenenfalls ergänzt durch die Angabe eines oder mehrerer Korrekturparameter in Abhängigkeit der Daten des betreffenden Auges und/oder in Bezug auf mindestens eine andere generische Linse des Satzes, um eine Bestellung für eine Kontaktlinse nach Mass (EKL) zu erhalten, wobei die so erhaltene Linse zu dem Satz generischer Linsen hinzugefügt werden kann;
- Herstellung der Kontaktlinse nach Mass (EKL) nach der im vorangehenden Schritt beschriebenen Bestellung unter Verwendung einer rechnergesteuerten Vorrichtung.

2. Verfahren nach Anspruch 1, dadurch gekennzeichnet, dass der Rechner zur Verarbeitung und Speicherung der Daten der neuen generischen Linse und die Steuerung der Vorrichtung zur Herstellung der EKL miteinander verbunden oder in derselben Einheit integriert sind.

3. Verfahren nach Anspruch 1 oder 2, dadurch gekennzeichnet, dass die Genauigkeit der zur Herstellung der EKL verwendeten Vorrichtung vorzugsweise im Bereich von 1µ liegt.

4. Unter Anwendung des Verfahrens nach einem der Ansprüche 1 bis 3 hergestellte EKL-Kontaktlinse.

5. EKL-Kontaktlinse nach Anspruch 4, dadurch gekennzeichnet, dass sie Stabilisierungsmittel, vorzugsweise Erhebungen aufweist.

## Claims

1. Method for the production of custom made contact lenses, comprising the steps of:
- creating a set of generic lenses each of which is defined by a number of parameters which can originate, in particular, from a table of values, a digitised image, a photograph, from parameters of an existing lens, from any other analog or digital modeling, or from any combination of possible modes of representation;
- selection of the generic contact lens which is best adapted to the eye of a patient, completed, as the case may be, by the indication of one or several rectifying parameters in function of the data of the eye and/or relating to at least one other generic lens of the set, in order to obtain an order for the manufacture of a custom made contact lens (FCL), the lens thus defined eventually being added to the set of generic lenses;
- manufacture of the custom made contact lens (FCL) on the basis of the order defined in the preceding step while using a computer controlled manufacturing device.

2. Method according to claim 1, characterised in that the computer processing and storing the data of the new generic lens and the control of the device for the manufacture of the FCL are connected to each other or integrated in the same unit.

3. Method according to claim 1 or 2, characterised in that the precision of the manufacturing device used for the production of the FCL is preferably in the order of 1µ.

4. FCL contact lens produced by application of the method according to one of claims 1 to 3.

5. Contact lens according to claim 4, characterised in that it comprises stabilising means, advantageously bosses.
